# FASCICULE DE BREVET EUROPEEN

(11) **EP 3 908 887 B1**
(45) Date de publication et mention de la délivrance du brevet: **02.12.2026**
(21) Numéro de dépôt: 20701883.9
(22) Date de dépôt: 08.01.2020
(51) Int. Cl.: G04B 17/06

(54) **PROCÉDÉ DE FABRICATION D'UN ORGANE RÉGULATEUR POUR MOUVEMENT HORLOGER**
VERFAHREN ZUR HERSTELLUNG EINES REGLERORGANS FÜR EIN UHRWERK
MANUFACTURING METHOD FOR REGULATING MECHANISM FOR A CLOCKWORK

(30) Priorité: 09.01.2019 CH 152019
(43) Date de publication de la demande: 17.11.2021
(73) Titulaire: LVMH Swiss Manufactures SA, 2300 La Chaux-de-Fonds (CH)
(72) Inventeur: CATTIN, Cyrill, 3280 Murten (CH); LUND, Jason, 2206 Les Geneveys-sur-Coffrane (CH); GARNIER, Maxime, 2000 Neuchâtel (CH); SEMON, Guy, 2000 Neuchâtel (CH)
(74) Mandataire: P&TS SA (AG, Ltd.)
(86) Numéro de dépôt international: PCT/IB2020/050106
(87) Numéro de publication internationale: WO 2020/144587

(56) Documents cités:
- WO-A1-2017/220672
- JP-A- 2008 116 205
- HANNA BRANDON H ET AL: "Mechanical Property Measurement of Carbon Infiltrated Carbon Nanotube Structures for Compliant Micromechanisms", JOURNAL OF MICROELECTROMECHANICAL SYSTEMS, IEEE SERVICE CENTER, US, vol. 23, no. 6, 1 December 2014 (2014-12-01), pages 1330 - 1339, XP011565571, ISSN: 1057-7157, [retrieved on 20141125], DOI: 10.1109/JMEMS.2014.2312847

## Description

### Domaine technique

La présente invention concerne un procédé de fabrication d'un organe régulateur pour mouvement horloger, notamment pour un mouvement horloger d'une pièce d'horlogerie telle qu'une montre mécanique, notamment une montre-bracelet mécanique.

### Etat de la technique

La base de temps d'une pièce d'horlogerie fait appel à un oscillateur avec une fréquence donnée dont les oscillations doivent être entretenues. Il est connu, notamment, des oscillateurs tels que le pendule (qui fait intervenir la gravité), le quartz (qui fait intervenir la piézoélectricité), le diapason (qui fait intervenir la déformation élastique) ou encore les ressorts de rappel de formes diverses (qui font également intervenir la déformation élastique), selon qu'ils sont conçus pour osciller sur de grandes ou de petites amplitudes.

En particulier, dans la plupart des montres mécaniques, l'organe régulateur comprend un ensemble balancier-spiral, à savoir un ensemble comprenant un balancier qui est un volant d'inertie, et un ressort en forme de spirale, appelé spiral, ressort spiral ou ressort-spiral, fixé par une extrémité sur l'axe du balancier et par l'autre extrémité sur un pont, dans lequel pivote l'axe du balancier.

L'ensemble balancier-spiral oscille à une fréquence donnée autour de sa position d'équilibre. Lorsque le balancier quitte cette position, il arme le spiral. Cela crée un couple de rappel qui, lorsque le balancier est libéré, le fait revenir à sa position d'équilibre. Comme le balancier a acquis une certaine vitesse, donc une énergie cinétique, il dépasse sa position d'équilibre jusqu'à ce que le couple résistant du spiral l'arrête et l'oblige à tourner dans l'autre sens. Suivant un mode entretenu, les oscillations se répètent. Ainsi, le spiral régule la période d'oscillation du balancier.

Les ressorts spiraux sont principalement fabriqués à partir d'une lame métallique à section rectangulaire et constante enroulée sur elle-même, notamment sous forme de spirale d'Archimède, à savoir une courbe qui peut être décrite dans les coordonnées polaires r et θ par la relation *r* = *a* · θ, dans laquelle a est une constate de proportionnalité strictement positive.

Les ressorts spiraux métalliques actuellement utilisé sont dans la plupart des cas réalisés à base d'alliages à base de fer et de nickel (comme par exemple les alliages Elinvar et Nivarox). Le choix de ces matériaux est principalement dicté par le besoin d'avoir un oscillateur dont les propriétés mécaniques et géométriques varient le moins possible lors de changements de température auxquels peut être exposée la montre, à savoir une plage pouvant aller jusqu'à une soixantaine de degrés (ou jusqu'à environ 100 °C si la montre est exposée dans une vitrine ensoleillée), plus spécifiquement dans une plage de 8 °C à 38 °C pour les montres certifiées chronomètre devant répondre aux critères de la norme ISO 3159.

En effet, la précision des montres mécaniques dépend de la stabilité en fonction du temps de la fréquence propre de l'ensemble balancier-spiral. Lorsque la température varie, les variations géométriques du spiral et du balancier, ainsi que la variation du module d'élasticité du spiral, modifient la fréquence propre de cet ensemble oscillant, perturbant ainsi la précision de la montre.

Depuis la découverte de matériaux possédant un coefficient de température du module d'élasticité du ressort spiral (ou coefficient thermique du module d'élasticité, ci-après α*_{E}*) positif, les premiers ayant été des alliages à base fer et nickel, la compensation thermique de l'oscillateur mécanique comprenant un spiral réalisé dans un de ces alliages est obtenue en ajustant le α*_{E}* du spiral en fonction du coefficient de dilatation thermique du balancier *CTE_{balancier}.*

Les alliages utilisés pour ces ressorts spiraux sont complexes, tant par le nombre de leurs composants que par les procédés métallurgiques utilisés dans le but d'obtenir une auto-compensation des variations du module d'élasticité du spiral, et les spiraux composés de ces alliages sont difficiles à fabriquer, notamment pour des raisons de mise en forme. En raison de la complexité des procédés utilisés pour réaliser les alliages, les propriétés mécaniques intrinsèques du métal ne sont pas constantes d'une production à l'autre. Ceci fait que, la production de ces spiraux est lente et coûteuse et le maintien d'une qualité constante est un défi permanent.

Il est connu également de réaliser des spiraux en silicium. Ces spiraux peuvent être fabriqués avec des procédés de découpage d'une galette en silicium (« wafer »), comme par exemple l'usinage par plasma ou par le procédé DRIE (Deep Reaction lon Etching). Le silicium peut être monocristallin, avec une orientation telle que <001>, <111> ou autre, ou encore être poly-cristallin.

Comme le silicium est un matériau ayant un coefficient de température du module d'élasticité α*_{E}* négatif, il est connu de combiner ce matériau avec un autre matériau ayant un coefficient de température du module d'élasticité positif, par exemple l'oxyde de silicium.

Le spiral qui en résulte n'est pas un spiral dans un matériau massif et isotrope (« isotropic bulk material »), comme dans le cas des ressorts spiraux métalliques ci-dessus, mais il s'agit d'un spiral ayant une structure composite de type « core-shell ». Ce spiral a des propriétés anisotropes, l'anisotropie étant liée d'une part au fait que le spiral comprend deux matériaux différents (silicium / oxyde de silicium) et d'autre part qu'un des deux matériaux (le silicium) est lui-même élastiquement anisotrope.

La demanderesse a développé un ressort spiral arrangé pour osciller dans un plan polaire, à savoir le plan (*r*, θ) d'oscillation du ressort spiral, ce plan polaire étant perpendiculaire à un axe. Le ressort-spiral est réalisé dans un matériau composite comprenant une forêt de nanotubes, notamment de nanotubes en carbone, juxtaposés et tenus entre eux par une matrice, notamment du carbone amorphe, la forêt de nanotubes se développant sensiblement dans la direction de cet axe, soit perpendiculairement au plan polaire d'oscillation. Ce ressort spiral est décrit dans le document WO2017/220672 déposé par la demanderesse.

Ce ressort spiral présente les principaux avantages suivants par rapport aux deux classes de matériaux (métaux, silicium / oxyde de silicium) analysés ci-dessus :
- précision supérieure: la liberté de design dans la fabrication (c'est-à-dire géométrie variable, comme par exemple une épaisseur non constante dans le plan polaire, et propriétés matériaux variables) permet une conception isochrone ;
- résistance accrue aux perturbations externes: comme la densité du carbone est faible et sa limite d'élasticité est élevée, la sensibilité du ressort spiral aux chocs et à la gravité est réduite ;
- bonne résistance aux champs magnétiques et à la magnétisation, le carbone (et donc le composite en carbone) étant un matériau non magnétique.

En conséquent, le ressort spiral développé par la demanderesse peut présenter une précision temporelle exceptionnelle, parce qu'intrinsèquement il peut être plus précis et moins sujet aux perturbations externes.

Cependant, si le ressort spiral développé par la demanderesse coopère avec un balancier connu dans un ensemble balancier-spiral, la fréquence d'oscillation qui en résulte n'est pas satisfaisante, car le comportement de l'ensemble balancier-spiral est influencé par les variations de température.

En d'autres mots, les balanciers classiques connus ne sont pas adaptés pour coopérer avec le ressort spiral développé par la demanderesse afin d'obtenir une variation de marche en fonction de la température qui répondant au minimum aux normes telles que la norme ISO 3159.

Le document JP2008116205 décrit un ressort spiral réalisé en un matériau composite comprenant une matrice de graphite et de carbone amorphe, renforcée par des nanotubes de carbone qui sont dispersés dans la matrice et alignés dans la direction longitudinale du spiral.

Il existe donc un besoin pour un organe régulateur pour mouvement horloger comprenant un balancier adapté pour coopérer avec le ressort spiral mentionné ci-dessus.

En outre, il existe également un besoin pour un spiral d'organe régulateur pour mouvement horloger qui puisse être adapté pour coopérer avec un balancier ayant des caractéristiques géométriques ou physiques singulières, par exemple ayant des valeurs de coefficients de dilatation thermique *CTEᵣ* inhabituelles.

### Bref résumé de l'invention

Un but de la présente invention est donc de proposer un procédé de fabrication d'un organe régulateur pour mouvement horloger comprenant un balancier adapté pour coopérer avec le ressort spiral mentionné ci-dessus.

Un autre but de la présente invention est de proposer un procédé de fabrication d'un organe régulateur pour mouvement horloger comprenant un spiral adapté pour coopérer avec un balancier ayant des caractéristiques géométriques ou physiques singulières, par exemple ayant des valeurs de coefficients de dilatation thermique *CTEᵣ* inhabituels.

Selon l'invention, ces buts sont atteints notamment au moyen du procédé de fabrication d'un l'organe régulateur selon la revendication 1.

Dans le cadre de cette invention, la demanderesse a étudié les propriétés physiques et techniques du ressort spiral décrit dans le document WO2017/220672 et a découvert que ce ressort spiral présente trois coefficients de dilatation thermiques distincts, à savoir :
- un premier coefficient *CTEₕ* de dilatation thermique dans la direction de l'axe perpendiculaire au plan polaire dans lequel le spiral est arrangé pour osciller et qui correspond à la direction de la hauteur du spiral,
- un deuxième coefficient *CTEₜ* de dilatation thermique dans une direction du plan du spiral et qui correspond à la direction de l'épaisseur du spiral, colinéaire au plan polaire,
- un troisième coefficient *CTEₗ* de dilatation thermique dans une autre direction du plan du spiral perpendiculaire à la direction du deuxième coefficient *CTEₜ* et qui correspond à la direction de la tangente à la longueur du spiral.

A ces trois coefficients s'ajoute le coefficient de température du module d'élasticité du ressort spiral α*_{E}.*

Le balancier selon l'invention comprend un matériau ayant un quatrième coefficient de dilatation thermique *CTEᵣ* dans la direction du rayon du balancier, à savoir la direction qui relie la portion distale ou périphérique du balancier (la serge) à l'axe du balancier.

Dans une variante préférentielle, le matériau adapté pour réaliser un balancier est isotrope, et par conséquent son coefficient de dilatation thermique est le même dans toutes les directions.

Selon l'invention, afin d'obtenir une variation de marche en fonction de la température satisfaisante et qui répond aux normes telles que par exemple la norme ISO 3159, le premier, deuxième, troisième, et quatrième coefficient de dilatation thermique et le coefficient de température du module d'élasticité du ressort spiral α*_{E}* doivent satisfaire la relation suivante : $- {C}_{REF} \leq \frac{X}{2} - {CTE}_{r} \leq {C}_{REF}$ (1) dans laquelle $X = {α}_{E} + {CTE}_{h} + 3 {CTE}_{t} - {CTE}_{l}$ (2) et dans laquelle *C_{REF}* est une valeur de référence de la variation de la marche du mouvement horloger en fonction de la température, exprimée en K⁻¹. Dans une variante préférentielle *C_{REF}* est dictée par la norme ISO 3159, et est égale à 0.6/86'400 K⁻¹, 86'400 étant le nombre de secondes dans un jour.

Le coefficient X est donc un coefficient qui groupe les coefficients thermiques du ressort spiral. Dans le cadre de l'invention, le coefficient de dilatation thermique du spiral est considéré dans ses trois composants distincts, à savoir *CTEₕ, CTEₜ* et *CTE_{L}.*

Si les caractéristiques thermiques du ressort spiral sont données (en d'autres mots, si la valeur de X est connue), il est possible de choisir le matériau adapté pour réaliser un balancier pouvant coopérer avec ce ressort spiral en fonction du coefficient de dilatation thermique *CTEᵣ* du balancier, dont la valeur est déterminée à partir de la relation (1). En d'autres mots, selon un premier aspect de l'invention, il est possible d'associer le ressort spiral réalisé dans un matériau composite comprenant une forêt de nanotubes juxtaposés et tenus par une matrice, la forêt de nanotubes se développant sensiblement dans la direction d'un axe perpendiculaire au plan polaire dans lequel le ressort spiral oscille, à un balancier réalisé dans un matériau dont le *CTEᵣ,* combiné avec les *CTE* et le α*_{E}* du spiral, permet d'obtenir un coefficient de température favorable.

Dans le cadre de la présente invention, la demanderesse a aussi découvert que la relation (1) permet réciproquement de partir de balanciers avec des caractéristiques géométriques ou physiques singulières, par exemple ayant des valeurs de coefficients de dilatation thermique *CTEᵣ* inhabituelles, pour non seulement définir des caractéristiques thermiques pour le ressort spiral, mais aussi avoir la possibilité de les obtenir grâce au procédé de fabrication de ce dernier.

En d'autres mots, selon un deuxième aspect de l'invention, il est également possible de fabriquer le spiral de façon à ce que le premier, deuxième, et troisième coefficients de dilatation thermique et le coefficient de température du module d'élasticité du spiral satisfassent la relation (1), le coefficient de dilatation thermique *CTEᵣ* du balancier étant donné ou connu. Autrement dit, pour un matériau de balancier avec *CTEᵣ,* il est possible de trouver la combinaison requise pour les trois *CTE* et le α*_{E}* du ressort spiral comprenant la forêt de nanotubes selon l'invention.

Il est ainsi possible de partir d'un balancier réalisé dans un matériau inhabituel tel que l'or, un alliage en or, le platine, un alliage en platine, etc. et de fabriquer un ressort spiral dans un matériau composite comprenant une forêt de nanotubes en carbone juxtaposés et tenus par une matrice, ce spiral ayant les trois coefficients de dilatation thermique et/ou le coefficient de température du module d'élasticité adaptés à ce matériau inhabituel.

Dans une variante préférentielle, le matériau dans lequel le ressort spiral est réalisé est transversalement isotrope (ou isotrope de façon transverse, « transversely isotropic »), c'est-à-dire que ses propriétés physiques directionnelles sont isotropes dans un plan et potentiellement différentes dans la direction perpendiculaire à ce plan.

Dans le cas du ressort spiral selon l'invention, le plan isotrope est le plan polaire (*r*, θ) dans lequel le spiral oscille.

Dans cette variante, la valeur du deuxième coefficient de dilatation thermique *CTEₜ* dans la direction de l'épaisseur du spiral est substantiellement égale à la valeur du troisième coefficient de dilatation thermique *CTE_{L}* dans la direction de la tangente à la longueur du ressort spiral. Par contre, la valeur du premier coefficient de dilatation thermique *CTEₕ* dans la direction de la hauteur du ressort spiral, c'est-à-dire dans la direction dans laquelle les nanotubes se développent et qui est perpendiculaire au plan isotrope, est différente.

En résumant, dans cette variante $\left\{\begin{matrix}{CTE}_{t} \approx {CTE}_{L} \\ {CTE}_{h} \neq {CTE}_{t} \\ {CTE}_{h} \neq {CTE}_{L}\end{matrix}\right.$

Cette isotropie transverse découle de la nature du ressort spiral car il comprend des nanotubes juxtaposés et tenus par une matrice, la forêt de nanotubes se développant dans la direction de la hauteur du ressort spiral.

Avantageusement, il est possible d'obtenir des propriétés mécaniques souhaitées du ressort spiral, en jouant par exemple sur l'espacement entre les nanotubes, leurs dimensions, leur nombre de parois, leur chiralité, la matière de la matrice, l'hybridation de la matrice et/ou la quantité de matrice infiltrée dans la forêt de nanotubes.

Dans une variante préférentielle, il est possible d'obtenir des propriétés mécaniques souhaitées du ressort spiral en variant un ou plusieurs paramètres de son procédé de fabrication.

Il est donc possible également que le matériau dans lequel le ressort spiral est réalisé soit anisotrope, à savoir les valeurs du premier coefficient *CTEₕ,* du deuxième coefficient *CTEₜ* et du troisième coefficient *CTE_{L}* de dilatation thermique sont toutes différentes.

Il est également possible de fabriquer le ressort spiral de façon à ce que les valeurs du premier coefficient *CTEₕ,* du deuxième coefficient *CTEₜ* et du troisième coefficient *CTE_{L}* de dilatation thermique soient sensiblement identiques.

En effet, la demanderesse a découvert que le procédé de réalisation du ressort spiral décrit dans le document WO2017/220672 donne une liberté considérable pour la définition des caractéristiques du ressort spiral, et notamment pour les trois coefficients de dilatation thermique et le coefficient de température du module d'élasticité *α_{E}* du ressort spiral. Selon l'invention, la valeur de *X* dépend de l'agencement de la forêt de nanotubes et/ou de la matrice. Cet agencement peut être adapté pendant le procédé de fabrication du ressort spiral, en variant un ou plusieurs paramètres de ce procédé de fabrication.

Dans un mode de réalisation du premier aspect de l'invention, les coefficients *CTEₕ, CTEₜ, CTE_{L}* et α*_{E}* du ressort spiral varient dans des plages particuliers, qui font en sorte que la valeur du coefficient de dilatation thermique du balancier *CTEᵣ* tombe dans une plage obtenue par la relation (1) qui est en dehors des valeurs des balanciers utilisé habituellement.

En particulier, dans une variante, la valeur du coefficient de dilatation thermique du balancier *CTEᵣ* varie dans la plage comprise entre 20 ppm/K et 34 ppm/K, alors que la valeur du coefficient de dilatation thermique des balanciers utilisé habituellement est d'environ 15 ppm/K.

Ces valeurs peuvent être obtenues par des balanciers réalisés dans au moins un des alliages suivants : alliages de aluminium, de cuivre, de zinc de manganèse et/ou d'argent, et/ou un mélange de tels alliages.

Cependant, afin d'obtenir une densité de masse adaptée à des applications horlogères, notamment une densité comprise classiquement entre
7 g/cm³ et 9 g/cm³, dans une variante préférentielle le balancier comprend des parties réalisées dans un matériau lourd, y compris avec des géométries complexes Dans ce contexte, un matériau est dit lourd si sa densité est plus grande qu'une densité de référence, par exemple plus grande que 15 g/cm³. Des exemples de matériaux lourds comprennent l'or, le platine, le tungstène, l'iridium ou un alliage de l'un ou plusieurs de ses métaux.

Dans une variante, ces parties sont réalisées par une inclusion d'au moins deux pièces réalisées dans un matériau lourd, par exemple sur la portion distale du balancier (par exemple une serge).

Dans une variante préférentielle, le balancier comprend au moins deux pièces qui sont diamétralement opposées afin de ne pas déséquilibrer dynamiquement le balancier.

Dans une variante préférentielle, il est possible de changer la position et/ou la géométrie d'au moins deux de ces pièces réalisées dans un matériau lourd de façon à varier le moment d'inertie du balancier et donc la fréquence de l'organe régulateur.

Dans cette variante, ces pièces permettent un réglage fin selon le principe du moment d'inertie variable, sans nécessairement modifier la longueur active du spiral, et donc sans perturber l'isochronisme de la montre.

Dans une variante, les moyens pour solidariser l'axe du balancier à la serge comprennent une pièce pleine ayant une forme symétrique équilibrée dynamiquement, par exemple un disque plein, solidarisé à l'axe et à la serge. La présence d'une pièce pleine, par exemple d'un disque plein, c'est-à-dire dépourvu de toute ouverture ou ajour, permet d'améliorer la visibilité du mouvement du ressort spiral par le porteur de la montre. En outre, la présence d'une pièce pleine telle qu'un disque plein peut servir à améliorer le comportement aéroélastique du balancier-spiral.

Dans une autre variante, le balancier peut avoir toute autre forme complexe, pour autant qu'il soit dynamiquement équilibré et qu'il assume sa fonction de volant d'inertie.

Dans une autre variante, les moyens pour solidariser l'axe du balancier à la serge comprennent une pièce en forme de disque comprenant au moins deux petites ouvertures arrangées d'une manière symétrique par rapport à l'axe du balancier, afin de donner un accès visuel pendant le montage. Alternativement la serge du balancier peut être coupée de la même façon à deux endroits symétriques par rapport à l'axe du balancier. Dans une autre variante, l'axe du balancier, la portion distale et les moyens pour solidariser l'axe du balancier à la portion distale sont réalisés dans un même matériau, sans discontinuité moléculaire.

Une variation de température est typiquement accompagnée par une variation d'humidité relative, et donc du frottement visqueux ou quadratique avec l'air (« trainée »). Il est opportun de minimiser cette trainée. Ceci peut être fait en optimisant le design du balancier (aérodynamisme) et/ou en optimisant sa surface (rugosité).

Dans une variante, le balancier présente une surface optimisé en prenant en compte des paramètres de profile (ISO 4287), des paramètres de motif (ISO 12085), ainsi que des paramètres de texture (ISO 13565-2 et ISO 12565-3). Dans une autre variante, le balancier présente une rugosité de surface moyenne, c'est-à-dire une moyenne arithmétique des pics et des creux sur une longueur donnée, inférieure à une rugosité de surface de référence, par exemple ≤5 µm.

Dans une variante, les nanotubes sont des nanotubes en carbone. Dans une variante, la matrice du ressort spiral selon l'invention comprend du carbone amorphe. Dans ce cas, le ressort spiral selon l'invention est réalisé dans un seul élément, le carbone ; il s'agit donc d'un spiral massif. Dans une variante, ce spiral massif est réalisé dans un matériau homogène.

Dans d'autres variantes, les nanotubes sont réalisés dans d'autres matériaux, par exemple en nitrure de bore (« boron nitride nanotubes », BNNT) ou en silicium.

### Brève description des figures

Des exemples de mise en œuvre de l'invention sont indiqués dans la description illustrée par les figures annexées dans lesquelles :
La figure 1 illustre une vue de dessus d'un mode de réalisation d'un ressort spiral de l'organe régulateur selon l'invention.
La figure 2 illustre schématiquement la constitution du matériau du ressort spiral sous forme de forêt de nanotubes, les nanotubes étant volontairement grossis pour plus de clarté et donc pas représentés à l'échelle.
Les figures 3A à 3E illustrent des étapes du procédé de fabrication du ressort spiral de l'organe régulateur selon l'invention.
Les figures 4A à 4E comportent un ensemble de cinq photos de forêts de nanotubes, notamment de nanotubes en carbone.
La figure 5 illustre la variation du coefficient de dilatation thermique d'un balancier en 10⁻⁶ · K⁻¹ en fonction de la densité de masse en g · cm⁻³ pour différentes familles de matériaux.
La figure 6A illustre une vue en perspective d'un exemple d'un organe régulateur selon l'invention.
La figure 6B illustre une vue de dessus de l'organe régulateur de la figure 6A.
La figure 7A illustre une vue en perspective d'un autre exemple d'un organe régulateur selon l'invention.
La figure 7B illustre une vue de dessus de l'organe régulateur de la figure 7A.

### Exemple(s) de mode(s) de réalisation de l'invention

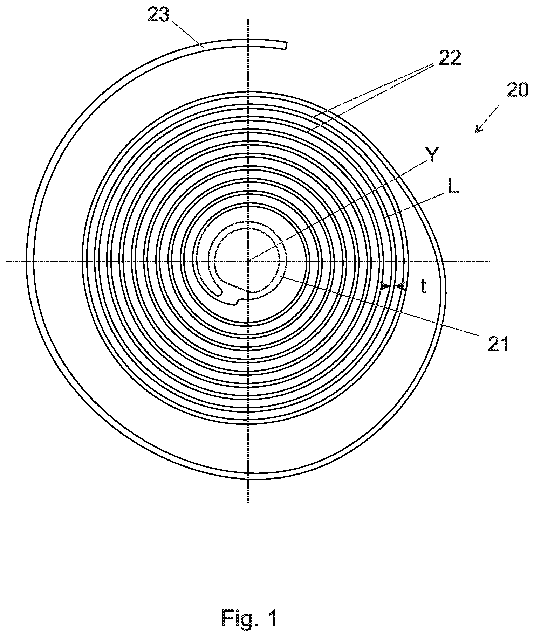

La figure 1 illustre une vue de dessus d'un mode de réalisation du ressort spiral 20 de l'organe régulateur selon l'invention. Ce ressort spiral 20 est arrangé pour tourner avec un balancier (non représenté) autour d'un axe central Y.

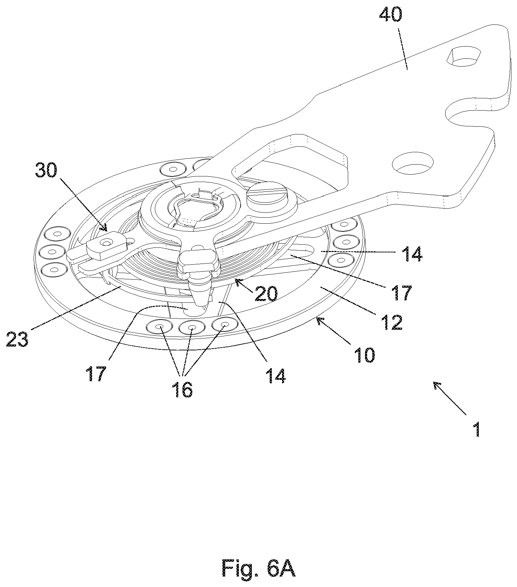

Le spiral 20 comprend plusieurs spires 22 et également une portion terminale 23 (« courbe terminale ») qui est fixée, généralement par un piton à un pont (référence 40 sur la figure 6A) sur lequel le balancier 10 est monté pivotant.

Le ressort spiral 20 comprend une portion centrale 21 qui permet de le fixer à l'axe du balancier.

Dans l'exemple de la figure 1, cette portion centrale 21 est intégrée dans le ressort spiral 20 et réalisée dans le même matériau du ressort spiral 20.

Comme visible par exemple sur la figure 1, les spires 22 ont une épaisseur t (dans le plan perpendiculaire à l'axe Y). L'épaisseur t peut être par exemple de l'ordre de quelques dizaines de microns, par exemple d'environ 10 µm à 100 µm.

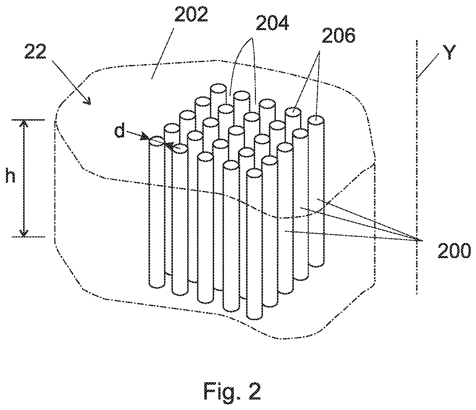

Comme visible sur la figure 2, les spires 22 ont également une hauteur h (parallèlement à l'axe Y). Comme visible sur la figure 2, le ressort spiral 20 est réalisé en un matériau composite comprenant des nanotubes 200 tenus par une matrice 202.

Les nanotubes 200 forment une forêt de nanotubes, c'est-à-dire les nanotubes 200 sont juxtaposés et disposés tous sensiblement parallèlement les uns aux autres.

Avantageusement, les nanotubes 22 sont disposés tous sensiblement parallèlement à l'axe Y. Ils sont généralement espacés régulièrement les uns des autres et présents dans toute la masse du matériau composite, avec une densité surfacique (dans le plan perpendiculaire à l'axe Y) qui est contrôlée par le procédé de croissance des nanotubes lors de la fabrication du ressort spiral 20.

Selon un mode préférentielle de l'invention, les nanotubes 200 sont en carbone.

Les nanotubes peuvent avoir un diamètre d compris entre 1 nm et 30 nm. Eventuellement, les nanotubes peuvent avoir un diamètre d compris entre 12 nm et 18 nm, notamment de l'ordre de 15 nm.

Les nanotubes peuvent avoir une longueur comprise entre comprise entre 50 µm et 500 µm. Eventuellement, les nanotubes peuvent avoir une longueur comprise entre comprise entre 175 µm et 275 µm, notamment de l'ordre de 225 µm. Cette longueur peut avantageusement correspondre à l'épaisseur h susmentionnée des spires 22 du ressort spiral.

La matrice 202 peut avantageusement être constituée également de carbone, notamment de carbone amorphe. La matrice peut avantageusement englober les nanotubes 200, en étant présente dans les interstices 204 entre nanotubes 200. Cette matrice permet d'apporter de la cohésion entre les nanotubes et de modifier ainsi les propriétés mécaniques de la forêt de nanotubes.

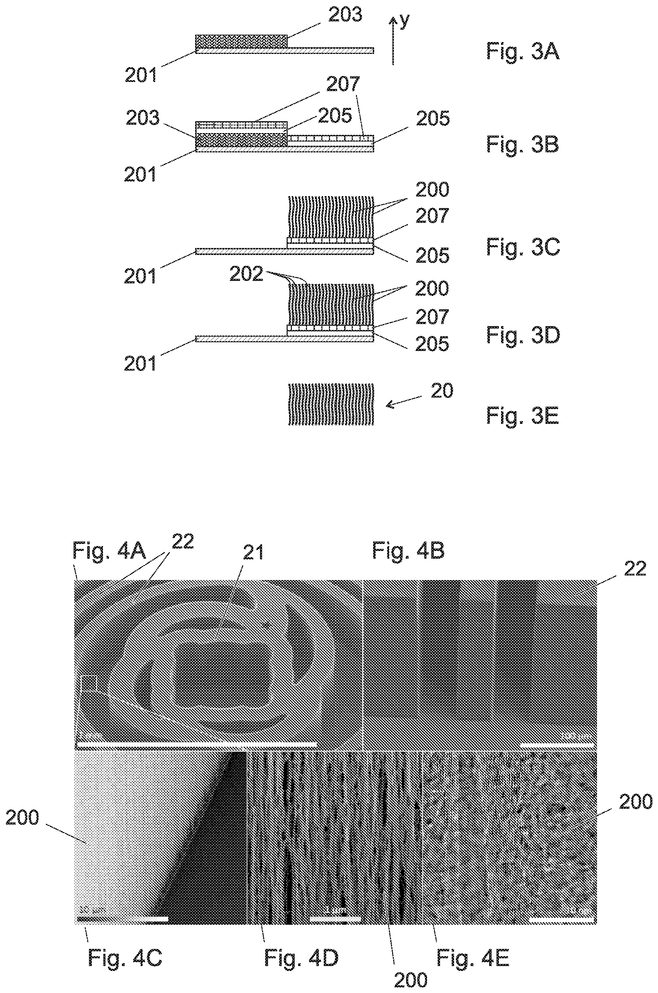

Les figures 3A à 3E illustrent des étapes du procédé de fabrication du ressort spiral de l'organe régulateur selon l'invention.

Dans la figure 3A, un substrat 201 tel qu'une galette (« wafer ») de silicium, disposé perpendiculairement à l'axe Y, est traité par exemple par photolithographie, à l'aide d'une ou plusieurs couches d'une résine photosensible 203 (« photoresist »), de façon connue en soi, pour que la croissance de la forêt de nanotubes ait lieu précisément aux endroits voulus.

Dans la figure 3B, le substrat 201 est recouvert d'une couche 205 qui représente une barrière physique pour éviter la diffusion du catalyseur 207 dans le substrat 201, par exemple une barrière réalisée en alumine, elle-même recouverte d'une couche de catalyseur 207 (par exemple en fer, cobalt ou nickel).

Dans la figure 3C, une forêt de nanotubes en carbone 200 grandit sensiblement perpendiculairement au substrat 201, par exemple en utilisant la technologie CVD (« Chemical Vapor Deposition »). Les nanotubes grandissent en correspondance des endroits structurés par photolithographie dans l'étape de la figure 3A.

Dans une variante préférentielle, il est possible de modifier certains paramètres du procédé de fabrication du ressort spiral, par exemple des paramètres de la technologie CVD (« Chemical Vapor Deposition »), afin de modifier les propriétés mécaniques du ressort spiral 20. Par exemple et de façon non limitative, il est possible de varier au moins un des paramètres suivants dans les plages suivantes :
- Composition du gaz, à savoir :
   quantité de C₂: 1% - 50%, en particulier 1% - 15%
   quantité de H₂: 1% - 99%, en particulier 1% - 30%
   quantité de gaz inertes, vapeur d'eau, autres: 0% - 98%
- Température : 500 °C - 1200 °C
- Pression : mode vide à 6E-5 bar - 1 bar
- Pureté des nanotubes 200 par étape de recuit sous vide ou sous gaz inerte (entre les étapes des figures 3C et 3D).
- Epaisseur et type du catalyseur 207.

Dans la figure 3D, un matériau constituant de la matrice 202 est infiltré dans la forêt de nanotubes 200, à savoir dans les interstices entre les nanotubes. Selon une variante préférentielle de l'invention, ce matériau est du carbone, notamment du carbone amorphe. Notamment, lors de l'étape de la figure 3D, des atomes (par exemple des atomes de carbone) de la phase gazeuse se déposent sur les parois extérieures des nanotubes 200, formant une structure (carbonée) amorphe qui se développe radialement jusqu'à la formation d'une matrice de liaison.. Il est possible, même si peu probable, que certains atomes se déposent également à l'intérieur des nanotubes 200 (référence 206 sur la figure 2).

Dans la figure 3E, le matériau composite est séparé du substrat 201, de la couche d'alumine 205 et de la couche de catalyseur 207 : on a ainsi fabriqué le spiral 20, par exemple par gravure humide ou par gravure en phase vapeur, notamment au fluorure d'hydrogène HF. Dans une autre variante, le matériau composite peut aussi être séparé du substrat de manière mécanique, par exemple à l'aide de trous réalisés dans la partie centrale 21 du ressort spiral 20.

Les figures 4A à 4E sont cinq photos de forêts de nanotubes obtenus avec le procédé décrit par les figures 3A à 3E, à différentes échelles décroissantes de 1 mm à 10 nm. La figure 4A illustre une vue en perspective d'une portion d'un autre mode de réalisation du ressort spiral 20.

Dans le cadre de cette invention, la demanderesse a étudié les propriétés techniques du ressort spiral ainsi produit et a découvert que ce ressort spiral présente trois coefficients de dilatation thermiques distincts, à savoir :
- un premier coefficient *CTEₕ* de dilatation thermique dans la direction de l'axe Y et qui correspond à la direction de la hauteur h du spiral 20,
- un deuxième coefficient *CTEₜ* de dilatation thermique dans une direction du plan du spiral et qui correspond à la direction de l'épaisseur e du spiral 20,
- un troisième coefficient *CTEₜ* de dilatation thermique dans une autre direction du plan du spiral perpendiculaire à la direction du deuxième coefficient *CTEₜ* et qui correspond à la direction de la tangente à la longueur L du spiral.

A ces trois coefficients s'ajoute le coefficient de température du module d'élasticité du ressort spiral α*_{E}.*

Il est connu que la période d'oscillation d'un ensemble balancier spiral est donnée par la formule suivante $T = 2 π \sqrt{\frac{I}{K}}$ (3) Dans laquelle :
- T: période d'oscillation[s]
- k: raideur du ressort spiral [Nm/rad]
- I: moment d'inertie du balancier [kg · m²]

La raideur k du spiral 20 peut être approchée comme indiqué par la formule (4) : $k = \frac{{Eht}^{3}}{12 L}$ (4) Dans laquelle :
- E: module d'élasticité [GPa]
- h: hauteur du ressort spiral [m]
- t: épaisseur du ressort spiral [m]
- L: longueur du ressort spiral [m]

Etant donné que le moment d'inertie I du balancier dans sa forme la plus simple est $I = {mr}^{2}$ (5) Dans laquelle :
- m: masse du balancier [kg]
- r: rayon du balancier [m]

La fréquence f d'oscillation de l'ensemble balancier-spiral est donc donnée par la formule suivante : $f = \frac{1}{T} = \frac{1}{2 π} \sqrt{\frac{K}{I}} = \frac{1}{2 π} \sqrt{\frac{{Eht}^{3}}{12 {Lmr}^{2}}}$ (6)

En dérivant la formule (6), on obtient la formule suivante : $\frac{Δ f}{f} = \frac{1}{2} \left(\frac{Δ E}{E}+\frac{Δ h}{h}+3\frac{Δ t}{t}-\frac{Δ l}{l}-\frac{Δ m}{m}-2\frac{Δ r}{r}\right)$ (7)

Pour une différence de température ΔT donnée, il est possible d'introduire les relations suivantes : $\frac{Δ E}{E} = {α}_{E} Δ T$ (8) $\frac{Δ h}{h} = {CTE}_{h} Δ T$ (9) $\frac{Δ t}{t} = {CTE}_{t} Δ T$ (10) $\frac{Δ L}{L} = {CTE}_{L} Δ T$ (11) $\frac{Δ r}{r} = {CTE}_{r} Δ T$ (12) Dans lesquelles
α*_{E}* coefficient de température du module d'élasticité du ressort spiral [ppm/K]
*CTEₕ* coefficient de dilatation thermique dans la direction de h du ressort spiral [ppm/K]
*CTEₜ* coefficient de dilatation thermique dans la direction de t du ressort spiral [ppm/K]
*CTE_{L}* coefficient de dilatation thermique dans la direction de L du ressort spiral [ppm/K]
*CTEᵣ* coefficient de dilatation thermique dans la direction du rayon du balancier [ppm/K]

En supposant que la masse m du balancier ne change pas avec la température, il est possible d'écrire : $\frac{Δ f}{f} = \frac{1}{2} Δ T \left({α}_{E}+{CTE}_{h}+3{CTE}_{t}-{CTE}_{l}-2{CTE}_{r}\right)$ (13) $\frac{Δ f}{f Δ T} = \frac{1}{2} \left({α}_{E}+{CTE}_{h}+3{CTE}_{t}-{CTE}_{l}-2{CTE}_{r}\right)$ (14)

En utilisant la relation (2) ci-dessus, la relation (14) peut être écrite comme suit : $\frac{Δ f}{f Δ T} = \frac{1}{2} \left(X-2{CTE}_{r}\right)$ (15) dans laquelle X dépend des propriétés du ressort spiral et *CTEᵣ* des propriétés du balancier.

Afin que l'ensemble balancier-spiral satisfasse aux exigences de normes de l'horlogerie, notamment de la norme ISO 3159, il est requis que la variation de la marche en fonction de la température, obtenue en soustrayant de la marche à 38 °C celle à 8 °C, le tout étant divisé par l'intervalle de température (30 °C), soit comprise entre ±0.6 s/(j · °C) (±*C_{ISO}* dans la suite). On aura donc : $\left|\frac{Δ f ⋅ 86400}{f Δ T}\right| \leq {C}_{ISO}$ (16)

En élaborant la relation (16), on obtient : $\left|\frac{86400}{2}⋅\left({α}_{E}+{CTE}_{h}+3{CTE}_{t}-{CTE}_{l}-2{CTE}_{r}\right)\right| \leq {C}_{ISO}$ (17) $\left|\frac{x}{2}-{CTE}_{r}\right| \leq \frac{{C}_{ISO}}{86400}$ (18) En définissant $\frac{{C}_{ISO}}{86400} = {C}_{REF}$ *C_{REF}* étant une valeur de référence de la variation de la marche du mouvement horloger en fonction de la température, exprimée en K⁻¹ on retrouve la relation (1) : $- {C}_{REF} \leq \frac{X}{2} - {CTE}_{r} \leq {C}_{REF}$ (1)

En utilisant la relation (1), il est possible de partir d'un ressort spiral donné, ayant une valeur de X connue, et de choisir le matériau du balancier de façon à ce que le quatrième coefficient de dilatation thermique *CTEᵣ* satisfasse la relation (1).

Inversement, il est possible de partir d'un balancier donné, ayant un coefficient de dilatation thermique *CTEᵣ* connu et même inhabituel, puis le matériau composite est fabriqué de façon à ce que la valeur de X satisfasse la relation (1). En d'autres mots, le matériau composite du ressort spiral 20 est réalisé de façon à ce que la valeur de X satisfasse la relation (1).

En effet, la demanderesse a découvert que le procédé de réalisation du ressort spiral en composite de carbone décrit par exemple dans les figures 3A à 3E, donne une liberté considérable pour la définition des caractéristiques du ressort spiral, tels que ses trois coefficients de dilatation thermique et son coefficient de température du module d'élasticité du ressort spiral *α_{E}.* Selon l'invention, la valeur de X dépend donc de l'agencement de la forêt de nanotubes et/ou de la matrice.

Lors de ce procédé de fabrication, notamment lors de l'étape 3C de décomposition du catalyseur et de croissance de nanotubes 200, et de l'étape 3D d'infiltration de la matrice, il est possible d'obtenir des propriétés mécaniques (et notamment thermiques) du ressort spiral souhaitées, en jouant par exemple sur l'espacement entre les nanotubes, leur dimensions, leur nombre de parois, leur chiralité, la matière de la matrice, l'hybridation de la matrice et/ou la quantité de matrice infiltrée dans la forêt de nanotubes.

Selon le deuxième aspect de l'invention, il est ainsi possible d'adapter les valeurs du premier, deuxième, et troisième coefficient de dilatation thermique *CTEₕ, CTEₜ, CTE_{L}* et/ou du coefficient de température du module d'élasticité du spiral α*_{E}* de sorte qu'ils satisfont la relation (1) ci-dessus, le coefficient de dilatation thermique *CTEᵣ* du balancier étant donné ou connu.

Il est ainsi possible de partir d'un balancier réalisé dans un matériau inhabituel tel que l'or, un alliage en or, le platine, un alliage en platine, etc. et fabriquer un ressort spiral dans un matériau composite comprenant une forêt de nanotubes en carbone juxtaposés et tenus par une matrice ayant les trois coefficients de dilatation thermique et/ou le coefficient de température du module d'élasticité du spiral adaptés à ce matériau inhabituel.

Dans une variante préférentielle, le matériau dans lequel le ressort spiral est réalisé est transversalement isotrope (ou isotrope de façon transverse, « transversely isotropic »), c'est-à-dire ses propriétés physiques sont symétriques par rapport à un axe normal par rapport à un plan isotrope. Dans ce plan isotrope, les propriétés du matériau sont les mêmes dans toutes les directions.

Dans le cas du ressort spiral selon l'invention, le plan isotrope est le plan dans lequel le spiral oscille.

Dans cette variante, la valeur du deuxième coefficient de dilatation thermique *CTEₜ* dans la direction de l'épaisseur du spiral est substantiellement égal à la valeur du troisième coefficient de dilatation thermique *CTE_{L}* dans la direction de la tangente à la longueur du ressort spiral. Par contre, la valeur du premier coefficient de dilatation thermique *CTEₕ* dans la direction de la hauteur du ressort spiral, c'est-à-dire dans la direction dans laquelle les nanotubes se développent et qui est perpendiculaire au plan isotrope, est différente.

En résumant, dans cette variante $\left\{\begin{matrix}{CTE}_{t} \approx {CTE}_{L} \\ {CTE}_{h} \neq {CTE}_{t} \\ {CTE}_{h} \neq {CTE}_{L}\end{matrix}\right.$

Cette isotropie transverse découle de la nature du ressort spiral car il comprend des nanotubes juxtaposés et tenus par une matrice, la forêt de nanotubes se développant dans la direction de la hauteur du ressort spiral.

Cependant, comme il est possible d'obtenir des propriétés mécaniques souhaitées du ressort spiral, en jouant par exemple sur l'espacement entre les nanotubes, leur dimensions, leur nombre de parois, leur chiralité, la matière de la matrice, l'hybridation de la matrice et/ou la quantité de matrice infiltrée dans la forêt de nanotubes, il est possible également que le matériau dans lequel le ressort spiral est réalisé soit anisotrope, à savoir que les valeurs du premier coefficient *CTEₕ,* du deuxième coefficient *CTEₜ* et du troisième coefficient *CTE_{L}* de dilatation thermique sont tous différents.

Il est également possible de fabriquer le ressort spiral de façon à ce que les valeurs du premier coefficient *CTEₕ,* du deuxième coefficient *CTEₜ* et du troisième coefficient *CTE_{L}* de dilatation thermique soient sensiblement identiques.

Dans un mode de réalisation du premier aspect de l'invention, les coefficients *CTEₕ, CTEₜ, CTE_{L}* et α*_{E}* du ressort spiral varient dans des plages particulières ou différentes des spiraux usuels, qui font en sorte que la valeur du coefficient de dilatation thermique du balancier *CTEᵣ* varie dans une plage obtenue par la relation (1) qui est également inhabituelle.

Des exemples de plages et de plages préférentielles des coefficients *CTEₕ, CTEₜ, CTE_{L}* et α*_{E}* du ressort spiral selon l'invention sont donnés dans le tableau suivant :

**Tableau 1**

| | **Plage [ppm/K]** | **Plage préférentielle [ppm/K]** |
|---|---|---|
| ***CTEₕ*** | 1.5 ± 1.5 | 1.34 ± 0.4 |
| ***CTEt*** | 2 ± 2 | 1.59 ± 1.0 |
| ***CTE_{L}*** | 2 ± 2 | 2.47 ± 0.6 |
| **α*_{E}*** | 50 ± 50 | 40 ± 15 |

En particulier, dans une variante la valeur du coefficient de dilatation thermique du balancier *CTEᵣ* varie dans la plage comprise entre 20 ppm/K et 34 ppm/K, alors que la valeur du coefficient de dilatation thermique des balanciers connus est d'environ 15 ppm/K.

Ces valeurs peuvent être obtenues par des balanciers réalisés dans au moins un des alliages suivants : alliages d'aluminium, de cuivre, de zinc, de manganèse et/ou d'argent ou mélange de tels alliages.

Des exemples des alliages à utiliser pour un balancier, notamment pour un balancier mono-matériau, selon l'invention sont donnés dans le tableau suivant :

**Tableau 2**

| **Matériau** | **X [% at.]** | **E** | **Y [% at.]** |
|---|---|---|---|
| Cu _{100-x-y}ZnₓE_{y} | 0-40 | Pb, Sn, Ni, Fe, Al | 1 - 10 |
| Mn_{100-x-y}CuₓE_{y} | 10 - 60 | Ni, Co, Fe | 0-20 |
| Mn_{100-x-y}NiₓE_{y} | 20 - 60 | Fe, Cu, Cr, Co | 0-20 |
| Ag_{100-xy}AlₓE_{y} | 25 - 50 | Au, Cu, Mn, Sn, In, Ge, Si | 0-20 |
| Ag_{100-x-y}ZnₓE_{y} | 10 - 35 | In, Cu, AL, Ge, Mg | 0 - 15 |
| Zn_{100-x-y}(Ag,Cu)ₓE_{y} | 40 - 60 | Au, Sn | 0 - 10 |
| Zn_{100-x-y}AlₓCu_{y} | 2-8 | | 0-5 |
| In_{100-x-y}TiₓE_{y} | 30 - 60 | Sn | 0-20 |

Un exemple, d'un matériau de la première ligne est l'alliage CuZn₃₉Pb₃, et un exemple de la deuxième ligne ou de la troisième ligne du tableau 2 est l'alliage Mn₇₂Cu₁₈Ni₁₀

D'autres exemples d'alliages, à utiliser notamment dans le cadre d'un balancier bi-matériaux, à savoir comprenant un matériau du tableau ci-dessous et un matériau lourd, comprennent :

**Tableau 3**

| **Matériau** | **X [% at.]** | **E** | **Y [% at.]** |
|---|---|---|---|
| Al_{100-x-y}ZnₓE_{y} | 70 - 85 | Cu, Ag | 0-20 |
| Al_{100-x-y}SiₓMg_{y} | 1 - 2 | | 2-3 |
| Ag_{100-x-y}MgₓE_{y} | 30 - 60 | In, Cu, Sn, Li | 0-30 |

Un exemple d'un matériau de la deuxième ligne du tableau 3 est l'Aluminium 6082.

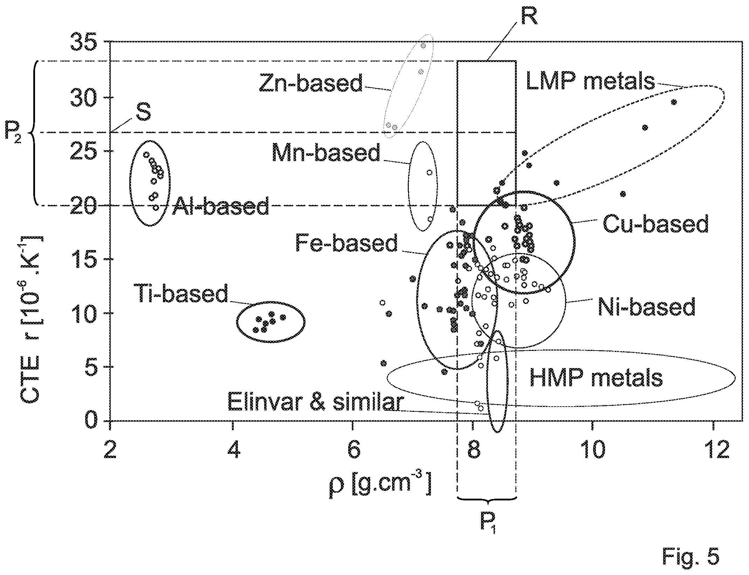

La figure 5 illustre la variation du coefficient de dilatation thermique d'un balancier *CTEᵣ* en 10⁻⁶ · K⁻¹ en fonction de la densité de masse ρ en g · cm⁻³ pour différentes familles de matériaux, illustrée schématiquement par des ronds groupant des points qui représentent des alliages spécifiques. Notamment la figure 5 illustre les familles suivantes :
- des alliages en Aluminium (Al-based)
- des alliages en Zinc (Zn-based)
- des alliages en Manganèse (Mn-based)
- des alliages en Cuivre (Cu-based)
- des alliages en Fer (Fe-based)
- des alliages au Nikel (Ni-based)
- des alliages en Titane (Ti-based)
- des métaux classiques pour les ressorts spiraux tels que l'Elinvar (Elinvar & similar)
- des métaux ayant un point de fusion bas (LMP metals)
- des métaux ayant un point de fusion haut (HMP metals).

Le rectangle R illustre les propriétés du balancier idéales pour
(i) un ressort spiral en nanotubes de carbone donnée, c.-à-d. avec les propriétés du tableau 1,
(ii) un volume maximale donnée, et
(iii) un moment d'inertie donnée,
à savoir un *CTEᵣ* compris entre 20 ppm/K et 34 ppm/K (plage P2) et une densité comprise entre environ 7.8 g/cm³ et environ 8.8 g/cm³ (plage P1).

Comme il est possible de voir sur la figure 5, il existe seulement très peu d'alliages conventionnels qui ont ces caractéristiques et donc qui appartiennent au rectangle R, à savoir certains alliages en cuivre. Il en existe cependant des alliages moins habituels tels que ceux indiqués d'une manière non-exhaustive dans le tableau 2.

D'autres familles d'alliages présentent un *CTEᵣ* entrant dans la plage désirée P2, comme les alliages en aluminium (AI-based), les alliages en zinc (Zn-based) et les alliages en manganèse (Mn-based), mais elles n'ont pas la bonne densité.

Aucun matériau de la figure 5 ne correspond au seuil S, qui correspond à une variation de la marche en fonction de la température sensiblement nulle.

En écrivant la formule (5) du moment d'inertie I du balancier en fonction de la densité de masse ρ en g · cm⁻³ et du volume V occupé par le balancier en cm³, on trouve : $I = {ρVr}^{2}$ (19)

Pour une pièce d'horlogerie donnée, le moment d'inertie I du balancier est fixe et le rayon du balancier r et son volume V sont limités à l'espace disponible dans la pièce. Cette limitation peut être surmontée en combinant au moins deux matériaux : un pour satisfaire aux exigences du *CTEᵣ* et qui peut avoir une densité de masse basse (comme c'est le cas par exemple des alliages en aluminium, en zinc ou en manganèse), et l'autre pour satisfaire aux exigences de densité de masse ρ.

En d'autres mots, afin d'obtenir une densité de masse adaptée à des applications horlogères, dans une variante préférentielle le balancier comprend des parties réalisées dans un matériau lourd. Dans ce contexte, un matériau est lourd si sa densité est plus grande qu'une densité de référence, par exemple plus grande que 15 g/cm³. Des exemples de matériaux lourds comprennent l'or, le platine, le tungstène, l'iridium et leurs alliages ou un mélange entre ces métaux ou leurs alliages, etc.

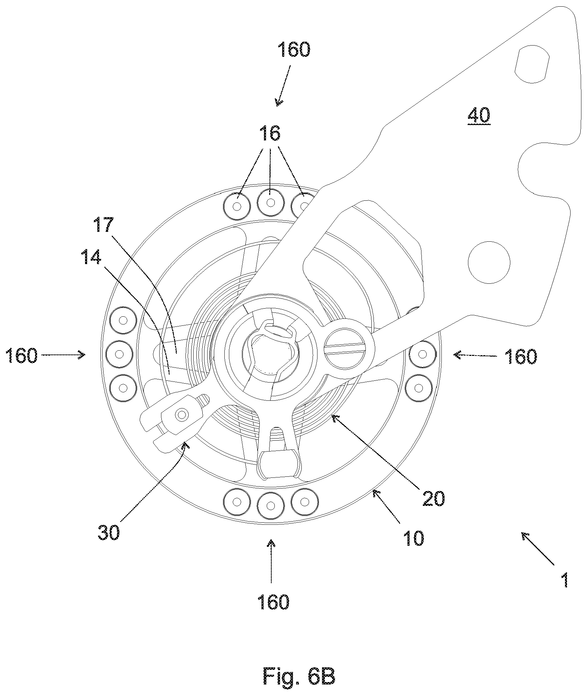

La figure 6A illustre une vue en perspective d'un exemple d'un l'organe régulateur 1 selon l'invention et qui comprend ces parties réalisées dans un matériau lourd. La figure 6B illustre une vue de dessus de l'organe régulateur de la figure 6A.

Dans la variante des figures 6A et 6B, le balancier 10 comprend une serge 12 et quatre bras 14, chaque bras 14 ayant une forme sensiblement triangulaire et comprenant une ouverture centrale 17, qui dans ce cas n'a pas de fonctions techniques. Dans une autre variante, le nombre des bras peut être différent de quatre. Dans une autre variante, les bras ont une forme sensiblement linéaire. Dans une autre variante encore, les bras sont dépourvus de toute ouverture.

Dans une variante (non illustrée), les moyens pour solidariser l'axe du balancier à la serge 14 ne comprennent pas de bras 14, mais une pièce pleine ayant une forme symétrique équilibrée dynamiquement, par exemple un disque plein, solidarisé à l'axe et à la serge 14. La présence d'un disque plein, c'est-à-dire dépourvu de toute ouverture ou ajour, permet d'améliorer la visibilité du mouvement du ressort spiral 20 par le porteur de la montre. Il peut servir aussi à améliorer le comportement aéroélastique du balancier-spiral.

Dans une autre variante (non illustrée), les moyens pour solidariser l'axe du balancier à la serge comprennent un disque comprenant au moins deux petites ouvertures arrangées d'une manière symétrique par rapport à l'axe du balancier, afin de donner un accès visuel pendant le montage. Alternativement la serge du balancier peut être coupée de la même façon à deux endroits symétriques par rapport à l'axe du balancier.

Dans une variante, les parties en matériau lourd sont réalisées par une inclusion d'une ou de plusieurs pièces 16 réalisées dans un matériau lourd, par exemple sur la serge 14.

Dans une variante préférentielle, l'axe du balancier, la serge et les moyens pour solidariser l'axe du balancier à la serge (les bras 14 par exemple) sont réalisés dans le même matériau, sans discontinuité moléculaire, c'est-à dire d'une seule pièce.

Dans une variante préférentielle, le balancier 10 comprend au moins deux pièces 16 diamétralement opposées afin de ne pas déséquilibrer le balancier 10.

Dans la variante des figures 6A et 6B, le balancier comprend quatre ensembles 160 de trois pièces 16, les quatre ensembles 160 étant disposés en correspondances des bras 14 du balancier. D'autres configurations peuvent être imaginées. Dans chaque ensemble, les pièces 16 sont de préférence équidistantes.

Ces pièces 16 peuvent être collées, vissées, chassées et/ou liées avec tout autre moyen (mobile ou amovible) au balancier 14.

Dans un mode de réalisation particulier, le balancier 10 est réalisé en aluminium 6082, ayant un *CTEᵣ =* 24 ppm/K et une densitéρ = 2.70 g/cm³, et les pièces 16 sont réalisées en alliage en or ayant une densité ρ = 16.4 g/cm³, ce qui permet au balancier ainsi constitué d'être classé dans le rectangle R de la figure 5.

Dans la variante des figures 6A et 6B, la fréquence d'oscillation est ajustée à l'aide d'une raquetterie 30 agissant sur la longueur active du spiral.

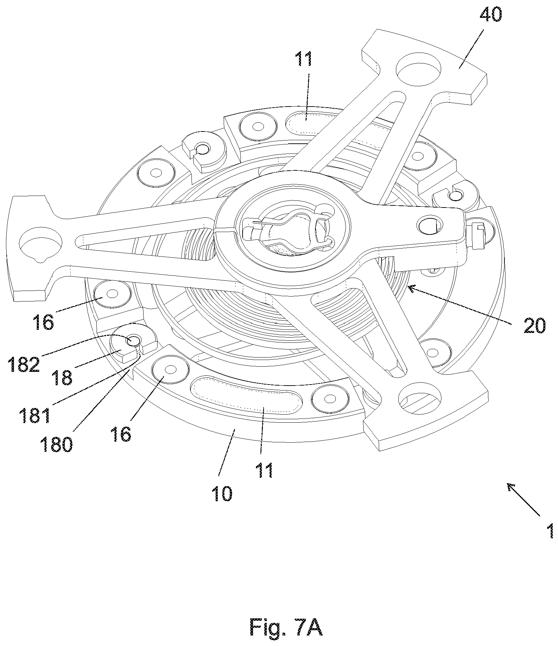

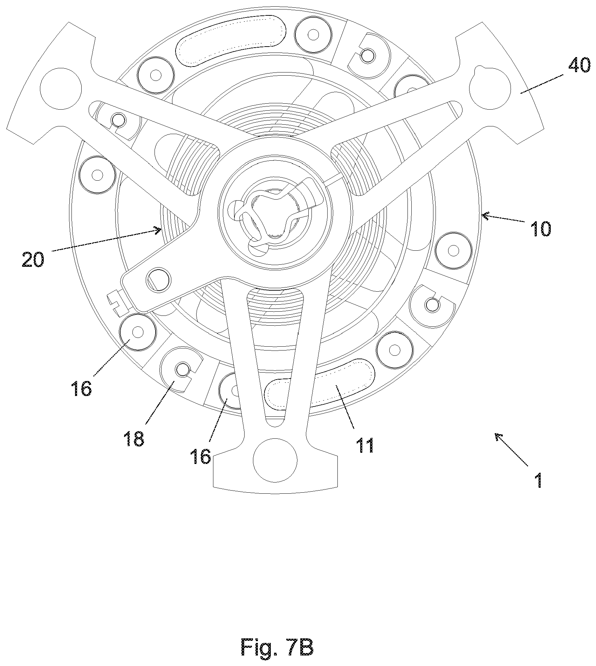

Dans une autre variante, il est possible de changer la position et/ou la géométrie d'au moins une de ces pièces 16 réalisées dans un matériau lourd de façon à varier le moment d'inertie du balancier et donc la fréquence de l'organe régulateur, sans nécessairement avoir besoin d'une raquetterie. Un exemple non limitatif de cette variante est illustré sur les figures 7A et 7B.

Dans la variante des figures 7A et 7B, le balancier comprend quatre ensembles 160, chaque ensemble comprenant deux pièces 16 similaires à celles des figures 6A et 6B et, au milieu, une pièce 18 dont le déplacement permet de varier le moment d'inertie du balancier 10.

Dans une variante spéciale, cette pièce 18 est une rondelle (ou tenon) montée avec une goupille, qui peut tourner dans un trou, par exemple un trou taraudé, réalisé dans la serge 14. La rondelle 18 tourne dans le plan du balancier perpendiculaire à son axe Y. Dans une variante, ce trou est réalisé dans une cavité 180 réalisée dans la serge 14 du balancier 10, notamment entre deux pièces 16.

La rondelle 18 présente une forme asymétrique par rapport à son axe de rotation 182. Dans l'exemple des figures 7A et 7B, elle a une forme de cercle coupé et présente une échancrure 181.

Si la rondelle 18 est tournée de manière à ce que l'échancrure 181 soit plus proche de l'extérieur du balancier (c'est-à-dire, loin de son centre), la masse du balancier est déplacée vers le centre. Cela accélère l'ensemble balancier-spiral si les paires de rondelle 18 opposées sont déplacées de manière égale, ou diminue la masse effective du balancier à cet endroit, si une seule rondelle 18 est tournée.

Si la rondelle 18 est tournée de manière à ce que l'échancrure 181 se rapproche du centre du balancier, l'ensemble balancier-spiral décélère si les paires de rondelle 18 opposées sont déplacées de manière égale, ou augmente la masse effective du balancier à cet endroit.

Dans cette variante, ces rondelles 18 permettent un réglage fin selon le principe du moment d'inertie variable, sans nécessairement modifier la longueur active du spiral, et donc sans perturber l'isochronisme de la montre.

La présence des rondelles 18 n'est pas nécessairement liée à la présence des pièces 16. On peut imaginer un balancier pourvu uniquement des rondelles 18 et dépourvu des pièces 16.

Les pièces 16 et les rondelles 18 peuvent être réalisées dans le même matériau lourd ou dans des matériaux lourds différents.

Dans la variante des figures 7A et 7B, la serge 14 comprend également des éléments décoratifs 11. Une variation de température est typiquement accompagnée par une variation de l'humidité relative, et donc du frottement visqueux ou quadratique avec l'air (« trainée »). Il est opportun de minimiser cette trainée. Ceci peut être fait en optimisant le design du balancier (aérodynamisme) et/ou en optimisant sa surface (rugosité).

Dans une variante, le balancier présente une rugosité de surface moyenne, c'est-à-dire une moyenne arithmétique des pics et des creux sur une longueur donnée, inférieure à une rugosité de surface de référence, par exemple égale à 5 µm.

### Signes de référence employés sur les figures

- 1: Organe régulateur
- 10: Balancier
- 11: Insert décoratif
- 12: Serge
- 14: Bras
- 16: Pièce dans un matériau lourd
- 17: Ouverture
- 18: Pièce (rondelle) variant le moment d'inertie du balancier
- 20: Ressort spiral
- 21: Portion centrale du ressort spiral 20
- 22: Spire
- 23: Portion terminale du spiral (courbe terminale)
- 30: Raquetterie
- 40: Pont
- 160: Ensemble de pièces 16
- 180: Cavité
- 181: Echancrure
- 182: Axe de rotation de la rondelle 18
- 200: Nanotube
- 201: Substrat
- 202: Matrice
- 203: Couches de résine photosensible
- 204: Interstice
- 205: Barrière pour la diffusion
- 206: Espace intérieur du nanotube
- 207: Couche de catalyseur
- Y: Axe
- R: Rectangle
- P1: Première plage (densité)
- P2: Deuxième plage (*CTEᵣ*)
- S: Seuil

## Revendications

1. Procédé de fabrication d'un organe régulateur (1) pour mouvement horloger, comprenant:
- fournir un ressort spiral (20) arrangé pour osciller dans un plan polaire perpendiculaire à un axe (Y), ledit ressort spiral (20) étant réalisé dans un matériau composite comprenant une forêt de nanotubes (200) juxtaposés et tenus par une matrice (202), la forêt de nanotubes (200) se développant sensiblement dans la direction dudit axe (Y),
- fournir un balancier (10) coopérant avec ledit ressort spiral (20),
le matériau du ressort spiral (20) présentant
- un premier coefficient de dilatation thermique *CTEₕ* dans la direction dudit axe,
- un deuxième coefficient de dilatation thermique *CTEₜ* dans la direction de l'épaisseur (e) dudit ressort spiral (20), colinéaire au plan polaire,
- un troisième coefficient de dilatation thermique *CTE_{L}* dans la direction de la tangente à la longueur (L) dudit ressort spiral (20), et
- le coefficient de température du module d'élasticité α*_{E}* du ressort le balancier (10) comprenant un matériau ayant un quatrième coefficient de dilatation thermique *CTEᵣ,*
le premier, deuxième, troisième et/ou quatrième coefficients de dilatation thermique et le coefficient de température du module d'élasticité du ressort spiral satisfaisant la relation $- {C}_{REF} \leq \frac{X}{2} - {CTE}_{r} \leq {C}_{REF}$
dans laquelle
*X =* α*_{E} + CTEₕ + 3CTEt - CTEₗ,* la valeur de X dépendant de l'agencement de la forêt de nanotubes et/ou de la matrice,
*C_{REF}* étant une valeur de référence de la variation de la marche du mouvement horloger en fonction de la température, et étant égale à 0.6/86'400 K⁻¹.

2. Procédé de fabrication d'un organe régulateur (1) selon la revendication 1, dans lequel la valeur de X est donnée ou connue, le matériau du balancier étant choisi de façon à ce que le quatrième coefficient de dilatation thermique *CTEᵣ* satisfasse ladite relation.

3. Procédé de fabrication d'un organe régulateur (1) selon la revendication 1, dans lequel le quatrième coefficient de dilatation thermique *CTEᵣ* est donné ou connu, le matériau composite dudit ressort spiral (20) est arrangé de façon à ce que la valeur de X satisfasse ladite relation.

4. Procédé de fabrication d'un organe régulateur (1) selon l'une des revendications 1 à 3, dans lequel les nanotubes (200) sont des nanotubes en carbone.

5. Procédé de fabrication d'un organe régulateur (1) selon l'une des revendications précédentes, dans lequel ladite matrice (202) comprend du carbone amorphe.

6. Procédé de fabrication d'un organe régulateur (1) selon l'une des revendications 4 ou 5, dans lequel le quatrième coefficient de dilatation thermique *CTEᵣ* du matériau du balancier est compris entre 20 ppm/K et 34 ppm/K.

7. Procédé de fabrication d'un organe régulateur (1) selon l'une des revendications 4 à 6, dans lequel le premier coefficient de dilatation thermique *CTEₕ* est compris dans la plage 1.5 ppm/K ± 1.5 ppm/K, de préférence dans la plage 1.34 ppm/K ± 0.4 ppm/K.

8. Procédé de fabrication d'un organe régulateur (1) selon l'une des revendications 4 à 7, dans lequel le deuxième coefficient de dilatation thermique *CTEt* est compris dans la plage 2 ppm/K ± 2 ppm/K, de préférence dans la plage 1.59 ppm/K ± 1.0 ppm/K.

9. Procédé de fabrication d'un organe régulateur (1) selon l'une des revendications 4 à 8, dans lequel le troisième coefficient de dilatation thermique *CTE_{L}* est compris dans la plage 2 ppm/K ± 2 ppm/K, de préférence dans la plage 2.47 ppm/K ± 0.6 ppm/K.

10. Procédé de fabrication d'un organe régulateur (1) selon l'une des revendications 4 à 9, dans lequel le coefficient de température du module d'élasticité du spiral α*_{E}* est compris dans la plage 50 ppm/K ± 50 ppm/K, de préférence dans la plage 40 ppm/K ± 15 ppm/K.

11. Procédé de fabrication d'un organe régulateur (1) selon l'une des revendications 2 ou 4 à 10, dans lequel le matériau dudit balancier est un alliage d'au moins un métal parmi l'aluminium, le cuivre, le zinc, le manganèse ou l'argent,
ou dans lequel le matériau dudit balancier est un des alliages du tableau suivant :
| **Matériau** | **X [% at.]** | **E** | **Y [% at.]** |
|---|---|---|---|
| Cu_{100-x y}ZnₓE_{y} | 0-40 | Pb, Sn, Ni, Fe ou Al | 1 - 10 |
| Mn_{100-x-y}CuₓE_{y} | 10 - 60 | Ni, Co ou Fe | 0-20 |
| Mn_{100-x-y}NiₓE_{y} | 20 - 60 | Fe, Cu, Cr ou Co | 0-20 |
| Ag_{100-x-y}AlₓE_{y} | 25 - 50 | Au, Cu, Mn, Sn, In, Ge ou Si | 0-20 |
| Ag_{100-x-y}ZnₓE_{y} | 10 - 35 | In, Cu, AL, Ge ou Mg | 0 - 15 |
| Zn_{100-x-y}(Ag,Cu)ₓE_{y} | 40 - 60 | Au ou Sn | 0 - 10 |
| Zn_{100-x-y}AlₓCu_{y} | 2-8 | | 0-5 |
| In_{100-x-y}TiₓE_{y} | 30 - 60 | Sn | 0-20 |

12. Procédé de fabrication d'un organe régulateur (1) selon la revendication 3, dans lequel le matériau dudit balancier est l'or, un alliage en or, le platine ou un alliage en platine.

13. Procédé de fabrication d'un organe régulateur (1) selon l'une des revendications 1 à 12, dans lequel le balancier (10) comprend un axe, une serge (12) et des moyens (14) pour solidariser l'axe du balancier à la serge (12).

14. Procédé de fabrication d'un organe régulateur (1) selon la revendication précédente, dans lequel l'axe du balancier, la serge (12) et les moyens pour solidariser l'axe du balancier à la portion distale sont réalisés dans un même matériau, sans discontinuité moléculaire.

15. Procédé de fabrication d'un organe régulateur (1) selon la revendication 14, dans lequel la serge (12) comprend une ou plusieurs pièces (16, 18) réalisées dans un matériau lourd ayant une densité supérieure à 15 g/cm³ et dans lequel le matériau dudit balancier est des alliages du tableau suivant :
| **Matériau** | **X [% at.]** | **E** | **Y [% at.]** |
|---|---|---|---|
| Al_{100-x-y}ZnₓE_{y} | 70 - 85 | Cu ou Ag | 0-20 |
| Al_{100-x-y}SiₓMg_{y} | 1 - 2 | | 2-3 |
| Ag_{100-x-y}MgₓE_{y} | 30 - 60 | In, Cu, Sn ou Li | 0-30 |

## Patentansprüche

1. Verfahren zur Herstellung eines Regulierorgans (1) für ein Uhrwerk, umfassend:
- Bereitstellen einer Spiralfeder (20), welche dazu angeordnet ist, um in einer polaren Ebene senkrecht zu einer Achse (Y) zu oszillieren, wobei die besagte Spiralfeder (20) aus einem Verbundwerkstoff gefertigt ist, welcher einen Wald von Nanoröhrchen (200) umfasst, die nebeneinander angeordnet und durch eine Matrix (202) zusammengehalten werden, wobei sich der Wald von Nanoröhrchen (200) im Wesentlichen in Richtung der besagten Achse (Y) erstreckt,
- Bereitstellen einer Unruh (10), welche mit der besagten Spiralfeder (20) zusammenwirkt,
wobei das Material der Spiralfeder (20) aufweist:
- einen ersten Wärmeausdehnungskoeffizienten *CTEₕ* in Richtung der besagten Achse,
- einen zweiten Wärmeausdehnungskoeffizienten *CTEₜ* in Richtung der Dicke (e) der besagten Spiralfeder (20), welche kollinear mit der polaren Ebene verläuft,
- einen dritten Wärmeausdehnungskoeffizienten *CTE_{L}* in Richtung der Tangente zur Länge (*L*) der besagten Spiralfeder (20), und
- den Temperaturkoeffizienten des Elastizitätsmoduls *α_{E}* der Feder,
wobei die Unruh (10) ein Material umfasst, welches einen vierten Wärmeausdehnungskoeffizienten *CTEᵣ* aufweist,
wobei der erste, der zweite, der dritte und/oder der vierte Wärmeausdehnungskoeffizient und der Temperaturkoeffizient des Elastizitätsmoduls der Spiralfeder die folgende Beziehung erfüllen: $- {C}_{REF} \leq \frac{X}{2} - {CTE}_{r} \leq {C}_{REF}$
worin
*X = α_{E} + CTEₕ +* 3*CTEₜ - CTEₗ,* wobei der Wert von *X* von der Anordnung des Nanoröhrchenwaldes und/oder der Matrix abhängt,
wobei *C_{REF}* ein Referenzwert für die Gangabweichung des Uhrwerks als Funktion der Temperatur ist und gleich 0,6/86 400 K⁻¹ ist.

2. Verfahren zur Herstellung eines Regulierorgans (1) gemäss Anspruch 1, worin der Wert von *X* gegeben oder bekannt ist, wobei das Material der Unruh so ausgewählt wird, dass der vierte Wärmeausdehnungskoeffizient *CTEᵣ* die besagte Beziehung erfüllt.

3. Verfahren zur Herstellung eines Regulierorgans (1) gemäss Anspruch 1, worin der vierte Wärmeausdehnungskoeffizient *CTEᵣ* gegeben oder bekannt ist und der Verbundwerkstoff der besagten Spiralfeder (20) so angeordnet ist, dass der Wert von *X* die besagte Beziehung erfüllt.

4. Verfahren zur Herstellung eines Regulierorgans (1) gemäss einem der Ansprüche 1 bis 3, worin die Nanoröhrchen (200) Kohlenstoff-Nanoröhrchen sind.

5. Verfahren zur Herstellung eines Regulierorgans (1) gemäss einem der vorhergehenden Ansprüche, worin die besagte Matrix (202) amorphen Kohlenstoff umfasst.

6. Verfahren zur Herstellung eines Regulierorgans (1) gemäss einem der Ansprüche 4 oder 5, worin der vierte Wärmeausdehnungskoeffizient *CTEᵣ* des Unruhmaterials zwischen 20 ppm/K und 34 ppm/K liegt.

7. Verfahren zur Herstellung eines Regulierorgans (1) gemäss einem der Ansprüche 4 bis 6, worin der erste Wärmeausdehnungskoeffizient *CTEₕ* im Bereich von 1,5 ppm/K ± 1,5 ppm/K, vorzugsweise im Bereich von 1,34 ppm/K ± 0,4 ppm/K liegt.

8. Verfahren zur Herstellung eines Regulierorgans (1) gemäss einem der Ansprüche 4 bis 7, worin der zweite Wärmeausdehnungskoeffizient *CTEₜ* im Bereich von 2 ppm/K ± 2 ppm/K, vorzugsweise im Bereich von 1,59 ppm/K ± 1,0 ppm/K liegt.

9. Verfahren zur Herstellung eines Regulierorgans (1) gemäss einem der Ansprüche 4 bis 8, worin der dritte Wärmeausdehnungskoeffizient *CTE_{L}* im Bereich von 2 ppm/K ± 2 ppm/K, vorzugsweise im Bereich von 2,47 ppm/K ± 0,6 ppm/K liegt.

10. Verfahren zur Herstellung eines Regulierorgans (1) gemäss einem der Ansprüche 4 bis 9, worin der Temperaturkoeffizient des Elastizitätsmoduls der Spiralfeder *α_{E}* im Bereich von 50 ppm/K ± 50 ppm/K, vorzugsweise im Bereich von 40 ppm/K ± 15 ppm/K liegt.

11. Verfahren zur Herstellung eines Regulierorgans (1) gemäss einem der Ansprüche 2 oder 4 bis 10, worin das Material der besagten Unruh eine Legierung aus mindestens einem Metall ausgewählt aus Aluminium, Kupfer, Zink, Mangan oder Silber ist,
oder worin das Material der besagten Unruh eine der in der folgenden Tabelle aufgeführten Legierungen ist:
| **Werkstoff** | **X [At. %]** | **E** | **Y [At. %]** |
|---|---|---|---|
| Cu_{100-x-y} Znₓ E_{y} | 0-40 | Pb, Sn, Ni, Fe or AI | 1-10 |
| Mn_{100-x-y} Cuₓ E_{y} | 10-60 | Ni, Co or Fe | 0-20 |
| Mn_{100-x-y} Niₓ E_{y} | 20-60 | Fe, Cu, Cr or Co | 0-20 |
| Ag_{100-x-y} Alₓ E_{y} | 25-50 | Au, Cu, Mn, Sn, In, Ge or Si | 0-20 |
| Ag_{100-x-y} Znₓ E_{y} | 10-35 | In, Cu, Al, Ge or Mq | 0-15 |
| Zn_{100-x-y} (Ag,Cu)ₓ E_{y} | 40-60 | Au or Sn | 0-10 |
| Zn_{100-x-y} Alₓ Cu_{y} | 2-8 | | 0-5 |
| In_{100-x-y} Tiₓ E_{y} | 30-60 | Sn | 0-20 |

12. Verfahren zur Herstellung eines Regulierorgans (1) gemäss Anspruch 3, worin das Material der besagten Unruh Gold, eine Goldlegierung, Platin oder eine Platinlegierung ist.

13. Verfahren zur Herstellung eines Regulierorgans (1) gemäss einem der Ansprüche 1 bis 12, worin die Unruh (10) eine Welle, einen Fusskreis (12) und Mittel (14) zum Befestigen der Unruhwelle am Fusskreis (12) umfasst.

14. Verfahren zur Herstellung eines Regulierorgans (1) gemäss dem vorhergehenden Anspruch, worin der Unruhwelle, der Fusskreis (12) und die Mittel zum Befestigen der Unruhwelle am distalen Abschnitt aus demselben Material und ohne jegliche molekulare Diskontinuität gefertigt sind.

15. Verfahren zur Herstellung eines Regulierorgans (1) gemäss Anspruch 14, worin der Fusskreis (12) einen oder mehrere Teile (16, 18) aus einem schweren Material mit einer Dichte von mehr als 15 g/cm³ umfasst, und worin das Material der besagten Unruh eine Legierung aus der folgenden Tabelle ist:
| **Werkstoff** | **X [At. %]** | **E** | **Y [At. %]** |
|---|---|---|---|
| Al_{100-x-y} Znₓ E_{y} | 70-85 | Cu or Ag | 0-20 |
| Al_{100-x-y} Siₓ Mg_{y} | 1-2 | | 2-3 |
| Ag_{100-x-y} Mgₓ E_{y} | 30-60 | In, Cu, Sn or Li | 0-30 |

## Claims

1. Method of manufacturing a regulating organ (1) for a watch movement, comprising:
- providing a spiral spring (20) arranged to oscillate in a polar plane perpendicular to an axis (Y), said spiral spring (20) being made of a composite material comprising a forest of nanotubes (200) juxtaposed and held together by a matrix (202), the array of nanotubes (200) extending substantially in the direction of said axis (Y),
- providing a balance (10) cooperating with said spiral spring (20),
the material of the spiral spring (20) having
- a first coefficient of thermal expansion *CTEₕ* in the direction of said axis,
- a second coefficient of thermal expansion *CTEₜ* in the direction of the thickness (e) of said spiral spring (20), which is collinear with the polar plane,
- a third coefficient of thermal expansion, *CTE_{L},* in the direction of the tangent to the length (L) of said spiral spring (20), and
- the temperature coefficient of the modulus of elasticity α*_{E}* of the spring
the balance (10) comprising a material having a fourth coefficient of thermal expansion *CTEᵣ,*
the first, second, third and/or fourth coefficients of thermal expansion and the temperature coefficient of the modulus of elasticity of the spiral spring satisfying the relationship $- {C}_{REF} \leq \frac{X}{2} - {CTE}_{r} \leq {C}_{REF}$
where
*X = α_{E} + CTEₕ + 3CTEt - CTEₗ,* the value of X depending on the arrangement of the nanotube forest and/or the matrix,
*C_{REF}* being a reference value for the variation in the rate of the watch movement as a function of temperature, and being equal to 0.6/86,400 ^{K⁻¹}.

2. Method of manufacturing a regulating organ (1) according to claim 1, in which the value of X is given or known, the material of the balance wheel being selected such that the fourth coefficient of thermal expansion *CTEᵣ* satisfies said relationship.

3. Method of manufacturing a regulating organ (1) according to claim 1, in which the fourth coefficient of thermal expansion *CTEᵣ* is given or known, and the composite material of said spiral spring (20) is arranged such that the value of X satisfies said relationship.

4. Method of manufacturing a regulating organ (1) according to one of claims 1 to 3, wherein the nanotubes (200) are carbon nanotubes.

5. Method of manufacturing a regulating organ (1) according to one of the preceding claims, wherein said matrix (202) comprises amorphous carbon.

6. Method of manufacturing a control element (1) according to one of claims 4 or 5, wherein the fourth coefficient of thermal expansion *CTEᵣ* of the balance material is between 20 ppm/K and 34 ppm/K.

7. Method of manufacturing a control element (1) according to one of claims 4 to 6, in which the first coefficient of thermal expansion *CTEₕ* lies within the range 1.5 ppm/K ± 1.5 ppm/K, preferably within the range 1.34 ppm/K ± 0.4 ppm/K.

8. Method of manufacturing a control element (1) according to one of claims 4 to 7, wherein the second coefficient of thermal expansion *CTEₜ* lies within the range 2 ppm/K ± 2 ppm/K, preferably within the range 1.59 ppm/K ± 1.0 ppm/K.

9. Method of manufacturing a control element (1) according to one of claims 4 to 8, wherein the third coefficient of thermal expansion *CTE_{L}* lies within the range 2 ppm/K ± 2 ppm/K, preferably within the range 2.47 ppm/K ± 0.6 ppm/K.

10. Method of manufacturing a regulating organ (1) according to one of claims 4 to 9, in which the temperature coefficient of the modulus of elasticity of the spiralα*_{E}* lies within the range 50 ppm/K ± 50 ppm/K, preferably within the range 40 ppm/K ± 15 ppm/K.

11. Method of manufacturing a regulating organ (1) according to one of claims 2 or 4 to 10, in which the material of said balance is an alloy of at least one metal selected from aluminium, copper, zinc, manganese or silver, or in which the material of said balance wheel is one of the alloys listed in the following table:
| **Material** | **X [at. %]** | **E** | **Y [at. %]** |
|---|---|---|---|
| Cu_{100-x-y} Znₓ E_{y} | 0-40 | Pb, Sn, Ni, Fe or Al | 1-10 |
| Mn_{100-x-y} Cuₓ E_{y} | 10-60 | Ni, Co or Fe | 0-20 |
| Mn _{100-x-y} Niₓ E_{y} | 20-60 | Fe, Cu, Cr or Co | 0-20 |
| Ag_{100-x-y} Alₓ E_{y} | 25-50 | Au, Cu, Mn, Sn, In, Ge or Si | 0-20 |
| Ag_{100-x-y} Znₓ E_{y} | 10-35 | In, Cu, Al, Ge or Mg | 0-15 |
| Zn_{100-x-y} (Ag,Cu)ₓ E_{y} | 40-60 | Au or Sn | 0-10 |
| Zn_{100-x-y} Alₓ Cu_{y} | 2-8 | | 0-5 |
| In_{100-x-y} Tiₓ E_{y} | 30-60 | Sn | 0-20 |

12. Method of manufacturing a regulating organ (1) according to claim 3, wherein the material of said balance wheel is gold, a gold alloy, platinum or a platinum alloy.

13. Method of manufacturing a regulating organ (1) according to one of claims 1 to 12, wherein the balance wheel (10) comprises an axis, a felloe (12) and means (14) for securing the balance wheel axis to the felloe (12).

14. Method of manufacturing a regulating organ (1) according to the preceding claim, in which the balance staff, the balance staff extension (12) and the means for securing the balance staff to the distal portion are made from the same material, without any molecular discontinuity.

15. Method of manufacturing a regulating component (1) according to claim 14, in which the felloe (12) comprises one or more parts (16, 18) made from a heavy material having a density greater than 15 ^{g/cm³,} and in which the material of said balance wheel is an alloy from the following table:
| **Material** | **X [at. %]** | **E** | **Y [at. %]** |
|---|---|---|---|
| Al_{100-x-y} Znₓ E_{y} | 70-85 | Cu or Ag | 0-20 |
| Al_{100-x-y} Siₓ Mg_{y} | 1-2 | | 2-3 |
| Ag_{100-x-y} Mgₓ E_{y} | 30-60 | In, Cu, Sn or Li | 0-30 |
